Europäisches Patentamt

**European Patent Office**

Office européen des brevets

(11) Veröffentlichungsnummer : **0 098 624**
**B1**

(12) **EUROPÄISCHE PATENTSCHRIFT**

(45) Veröffentlichungstag der Patentschrift :
22.01.86

(21) Anmeldenummer : 83200762.9

(22) Anmeldetag : 30.05.83

(51) Int. Cl.⁴ : **H 02 H  3/38,** H 02 H  3/50,
H 02 H  3/44

(54) Verfahren zur Fehler- oder auch Fehlerrichtungsdetektion in elektrischen Leitungen und Ausführungsmittel hierzu.

(30) Priorität : 23.06.82 CH 3836/82

(43) Veröffentlichungstag der Anmeldung :
18.01.84 Patentblatt 84/03

(45) Bekanntmachung des Hinweises auf die Patenterteilung : 22.01.86 Patentblatt 86/04

(84) Benannte Vertragsstaaten :
CH DE FR LI NL SE

(56) Entgegenhaltungen :
EP-A- 0 046 317
FR-A- 2 241 896
FR-A- 2 422 278
FR-A- 2 435 143

(73) Patentinhaber : BBC Aktiengesellschaft Brown,
Boveri & Cie.
Haselstrasse
CH-5401 Baden (CH)

(72) Erfinder : Vitins, Michael, Dr., Dipl.-Ing.
Meierwiesenstrasse. 36/23
CH-8064 Zürich (CH)

Jouve, 18, rue St-Denis, 75001 Paris, France

**0 098 624**

**Beschreibung**

Die Erfindung betrifft ein Verfahren gemäss dem Oberbegriff des Anspruchs 1 und Ausführungsmittel hierzu gemäss dem Oberbegriff des Anspruchs 10 oder 12.

Bei jedem Schaltvorgang in einem elektrischen Energieversorgungsnetz, insbesondere bei Eintritt eines Fehlers, z. B. eines Kurzschlusses auf einer Leitung, breitet sich im Energieversorgungsnetz, ausgehend von der Schalt- oder der Fehlerstelle eine Wanderwelle aus. An einem beliebigen Messort im Energieversorgungsnetz äussert sich der Schaltvorgang oder der Fehler, mit einer durch die Laufzeit der Wanderwelle vom Schalt- oder Fehlerort zum Messort bedingten Zeitverzögerung, durch das Auftreten jeweils einer transienten Komponente in Leitungsspannung und Leitungsstrom. Aus Leitungsspannung und Leitungsstrom können z. B. mittels Messwandlern diesen entsprechende Spannungs- und Stromsignale abgeleitet werden. Separiert man aus dem Spannungs- und dem Stromsignal jeweils die transiente Komponente, z. B. durch Subtraktion der stationären betriebsfrequenten Komponente, so erhält man ein Spannungs- und ein Stromsprungsignal. Die Momentanwerte dieser Sprungsignale definieren als Koordinaten in einem von ihnen selbst gebildeten kartesischen Koordinatensystem einen Punkt, der mit der Zeit eine vom Ursprung dieses Koordinatensystems ausgehende Bewegungslinie durchläuft. Der Schaltvorgang oder der Fehler kann dadurch detektiert werden, dass der Punkt auf die Ueberschreitung von Auslösegrenzen in diesem Koordinatensystem überwacht wird, z. B. durch einen Vergleich des Momentanwertes eines der Sprungsignale mit einem von dem Momentanwert des jeweils anderen Sprungsignal abhängigen Grenzwert. Die Richtung vom Messort zum Schalt- oder Fehlerort kann dabei aus der Art des Quadranten abgeleitet werden, in welchem die Ueberschreitung einer Auslösegrenze erfolgt (Quadrantenkriterium). Jeweils diagonal gegenüberliegende Quadranten bestimmen eine einheitliche Fehlerrichtung. Da die Bewegungslinie bei einem Fehler im allgemeinen einen grösseren Abstand vom Ursprung erreicht als bei einem normalen Schaltvorgang, oder, bei einem Mehrphasensystem, bei Fehlern auf benachbarten Phasen, können die Schaltvorgänge sowie die phasenfremden Fehler von den direkten Fehlern durch Auslösegrenzen mit einem geeigneten Abstand vom Ursprung diskriminiert werden. Die Zeit, die zum Erkennen eines Fehlers benötigt wird, beträgt insgesamt nur den Bruchteil einer Netzperiode. Damit findet das beschriebene Verfahren bevorzugt Verwendung in Höchstspannungsnetzen, in denen es zur Vermeidung von Schäden an den im allgemeinen sehr teuren Anlageelementen auf eine möglichst schnelle Fehlerdetektion ankommt.

Es ist ein Verfahren der Beschriebenen Art bekannt (DE-B-28 41 009), bei welchem bei der Ableitung der Sprungsignale in ihnen enthaltene höhere Oberschwingungen durch Filterung unterdrückt werden. Die höheren Oberschwingungen in den Sprungsignalen haben zur Folge, dass der durch die Momentanwerte der Sprungsignale in dem durch die Sprungsignale gebildeten kartesischen Koordinatensystem definierte Punkt stark fluktuiert. Durch diese Fluktuation kann der Punkt eine der Auslösegrenzen überschreiten, obwohl seine mittlere Bewegungslinie diese Auslösegrenze nicht überschreitet. Kritisch sind diese Fluktuationen bei Fehlern, die kurz nach einem Maximum der Netzspannung auftreten. Bei diesen Fehlern durchläuft die mittlere Bewegungslinie des Punktes zwei aneinandergrenzende Quadranten des Koordinatensystems mit z. T. geringem Abstand von den Auslösegrenzen, um erst in einem dritten Quadranten eine dieser Auslösegrenzen zu überschreiten. Hierbei würde eine durch Fluktuationen bedingte Ueberschreitung im zweiten und mittleren der durchlaufenden Quadranten zu einem falschen Fehlerrichtungsentscheid führen. Die bekannte Lösung dieses Problems, durch Unterdrückung der höheren Oberwellen in den Sprungsignalen die Fluktuationen zu dämpfen, verlängert jedoch die Zeit für die Fehlererkennung.

Es ist daher die Aufgabe der Erfindung Fehlerrichtungsentscheide unter Zugrundelegung des Quadrantenkriteriums stets mit Sicherheit zu gewährleisten.

Diese Aufgabe wird erfindungsgemäss gelöst durch die Merkmale der Hauptanspruch-Kennzeichen.

Wesentlich für die erfindungsgemässe Lösung ist demnach, dass der Eintritt des Punktes in eine Grenzzone registriert wird, welche in einem ersten Quadranten des Koordinatensystems einer Auslösegrenze vom Ursprung aus gesehen vorgelagert ist. Zu einem vorgebbaren Zeitpunkt danach, wird dann eine Auslösegrenze in mindestens dem im Sinne der Bewegungsrichtung der mittleren Bewegungslinie des Punktes an den ersten Quadranten angrenzenden zweiten Quadranten, wenigstens abschnittsweise auf einen grösseren Abstand zum Ursprung des Koordinatensystems eingestellt. Damit wird erreicht, dass bei Fehlern, die jeweils kurz nach einem Maximum der Netzspannung auftreten, deren mittlere Bewegungslinie, wie erläutert, drei aneinandergrenzende Quadranten durchläuft, im mittleren dieser Quadranten ein grösserer Sicherheitsabstand der Auslösegrenzlinie zur Bewegungslinie des Punktes hergestellt und dadurch die Sicherheit des Fehlerrichtungsentscheids bei den genannten Fehlern entscheidend erhöht wird. Mit dem grösseren Sicherheitsabstand der Auslösegrenze von der mittleren Bewegungslinie des Punktes im mittleren der drei Quadranten entsteht aber auch ein grösserer Spielraum für die Fluktuationen des Punktes. Damit erübrigt sich weitgehend eine Dämpfung der Fluktuationen durch Unterdrückung der höheren Oberwellen in den Sprungsignalen, wodurch sich in vorteilhafter Weise die Zeit für die Fehlererkennung verkürzen lässt.

Weitere Merkmale sowie Vorteile der Erfindung ergeben sich aus nachfolgend anhand von Zeichnungen erläuterten Ausführungsbeispielen :

Es zeigt :

Figur 1a, Figur 1b jeweils ein Koordinatensystem, gebildet aus einem Spannungs- und einem Stromsprungsignal, mit einer Bewegungslinie mit bekannten Auslösegrenzen und diesen vorgelagerten erfindungsgemässen Grenzzonen,

Figur 2 eine Schaltungsanordnung zur Durchführung des erfindungsgemässen Verfahrens,

Figur 3 ein Beispiel für den Aufbau der in der Schaltungsanordnung gemäss Fig. 2 enthaltenen ersten Funktionsgeber,

Figur 4 ein Blockschaltbild eines Prozessrechensystems,

Figur 5 ein Flussdiagramm eines Rechenprogramms zur Ausführung des erfindungsgemässen Verfahrens, und

Figur 6 ein Koordinatensystem entsprechend Fig. 1 zur Erläuterung des Rechenprogramms.

In den Figuren sind gleiche Teile mit gleichen Symbolen bezeichnet.

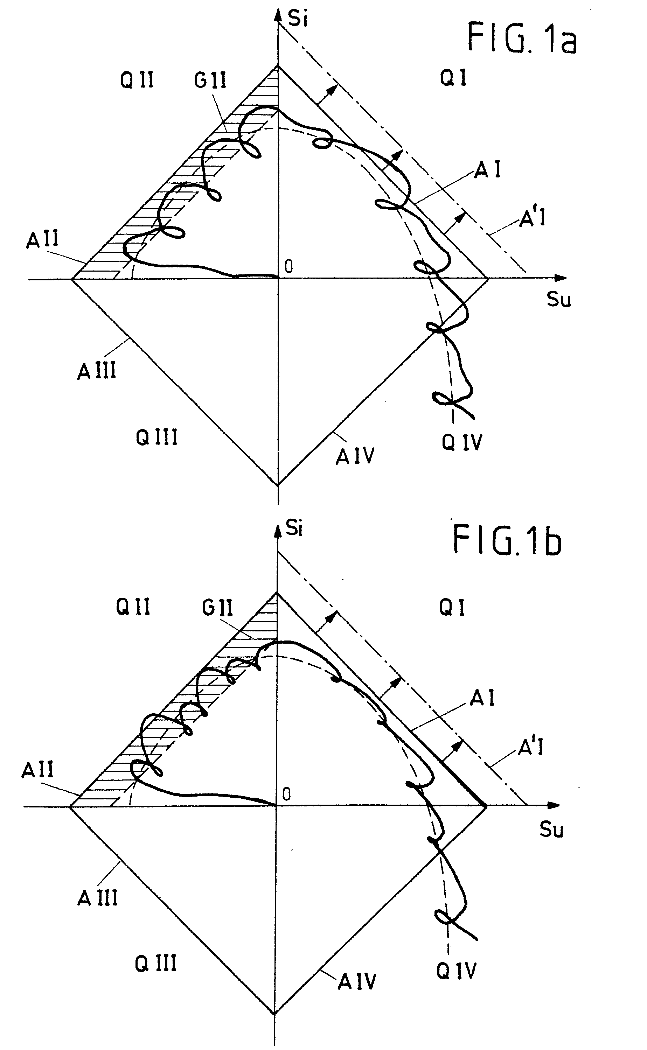

In den Fig. 1a und Fig. 1b ist jeweils ein aus einem Spannungssprungsignal Su als Abszisse und einem Stromsprungsignal Si als Ordinate gebildetes kartesisches Koordinatensystem dargestellt. In dieses Koordinatensystem ist jeweils eine Bewegungslinie B des durch die Momentanwerte des Spannungssprungsignals Su und des Stromsprungsignals Si in diesem Koordinatensystem definierten Punktes für einen Fehler eingezeichnet, welcher kurz nach einem Maximum der Netzspannung eingetreten ist. Durch den Einfluss der höheren Oberwellen in den Sprungsignalen Su, Si fluktuiert diese Bewegungslinie B um eine mittlere Bewegungslinie B', die in Fig. 1a und Fig. 1b jeweils durch eine unterbrochene Linie dargestellt ist. Weiterhin zeigen Fig. 1a und Fig. 1b in jedem Quadranten QI, QII, QIII, QIV des Koordinatensystems jeweils eine Auslösegrenze AI, AII, AIII, AIV. Ueberschreitet der Punkt bzw. seine Bewegungslinie B eine dieser Auslösegrenzen AI, AII, AIII, AIV, so wird ein Fehler detektiert. Erfolgt diese Ueberschreitung im Quadranten QII oder QIV so wird z. B. ein Vorwärtsfehler detektiert, erfolgt die Ueberschreitung im Quadranten QI oder QIII, so wird entsprechend ein Rückwärtsfehler detektiert. Vorwärts- und Rückwärtsfehlerstellen liegen beidseitig zum Messort. Bei einem Fehler, der wie im Beispiel von Fig. 1a und 1b kurz nach einem Maximum der Netzspannung eingetreten ist, dessen mittlere Bewegungslinie B', wie gezeichnet, ohne Ueberschreitung von Auslösegrenzen AII, AI zunächst zwei Quadranten QII, QI durchläuft, um erst in einem dritten Quadranten QIV eine solche Auslösegrenze AIV zu überschreiten, kann es durch die Wirkung der Fluktuationen jedoch vorkommen, dass bereits eine Ueberschreitung einer der Auslösegrenzen AII oder AI im ersten Quadranten QII oder im zweiten Quadranten QI der drei durchlaufenen Quadranten QII, QI, QIV eintritt. Im letztgenannten Fall, der in Fig. 1a dargestellt ist, würde anstelle eines Vorwärtsfehlers, entsprechend einer Ueberschreitung der Auslösegrenze AIV im Quadranten QIV, ein Rückwärtsfehler fehlerhaft detektiert. Eine durch die Fluktuationen bedingte Ueberschreitung im ersten Quadranten QII der drei durchlaufenen Quatranten QII, QI, QIV, die in Fig. 1b dargestellt ist, ist dagegen unschädlich, da wie erläutert, dieser der gleichen Fehlerrichtung entspricht wie der ihm gegenüberliegende dritte durchlaufene Quadrant QIV. Die Gefahr einer falschen Fehlerrichtungsbestimmung durch die Fluktuationen besteht daher nur im mittleren QI der drei durchlaufenen Quadranten QII, QI, QIV. Um in diesem mittleren Quadranten QI eine Ueberschreitung der Auslösegrenze AI durch die Fluktuationen zu verhindern, wird erfindungsgemäss die Auslösegrenze AI in diesem mittleren Quadranten QI auf einen grösseren Abstand zum Ursprung 0 eingestellt. Als Kriterium für diese Einstellung wird der Eintritt des Punktes in eine Grenzzone GII ausgewertet, welche der Auslösegrenze AII vom Ursprung 0 aus gesehen im ersten Quadranten QII vorgelagert ist. Der mittlere Quadrant QI, in dem die Einstellung erfolgt, liegt jeweils mit dem zuerst durchlaufenen Quadranten QII auf der gleichen Seite der durch das Spannungssprungsignal Su gebildeten Koordinatenachse. Die Einstellung kann zu einem vorgebbaren Zeitpunkt nach Eintritt des Punktes in die genannte Grenzzone GII durchgeführt werden, vorzugsweise dann, wenn der Punkt die Grenzzone GII wieder verlässt. Selbstverständlich braucht eine Einstellung dann nicht zu erfolgen, wenn der Punkt die Grenzzone GII über die zugehörige Auslösegrenze AII verlässt. Auch braucht die Auslösegrenze AI im mittleren der durchlaufenen Quadranten QI nicht in ihrer gesamten Länge auf einen grösseren Abstand vom Ursprung 0 eingestellt zu werden. Eine abschnittsweise Einstellung der Auslösegrenze AI auf einen grösseren oder eine abschnittsweise Einstellung auf verschiedene Abstände zum Ursprung 0 ist ausreichend. Gemäss einer bevorzugten Ausführungsform der Erfindung werden die Auslösegrenzen AI, AIII bzw. AII, AIV jeweils gegenüberliegender Quadranten QI, QIII bzw. QII, QIV gemeinsam auf einen grösseren Abstand zum Ursprung 0 eingestellt, was die Detektionssicherheit noch erhöht. Die Tiefe der einer Auslösegrenze AII vorgelagerten Grenzzone GII, sowie der Faktor, um den eine Auslösegrenze AI jeweils auf einen grösseren Abstand zum Ursprung 0 des Koordinatensystems eingestellt wird, richtet sich vorzugsweise nach der Stärke der zugelassenen Fluktuationen. Misst man die Tiefe der einer Auslösegrenze AII vorgelagerten Grenzzone GII von jedem beliebigen Punkt der Auslösegrenze AII in Richtung zum Ursprung 0 des Koordinatensystems, so kann für die so bestimmte Tiefe der Grenzzone GII beispielsweise ein fester Wert zwischen 5 % und 50 % des Abstandes des jeweiligen Punktes vom Ursprung 0 gewählt werden. Andererseits kann eine einheitliche Tiefe der Grenzzone GII entlang der jeweiligen Auslösegrenze AII gemessen senkrecht zu dieser Auslösegrenze AII gewählt werden. Für den obengenannten Faktor kommt z. B. ein Wert zwischen 1,05 und 2 in Frage.

Vorzugsweise sind Grenzzonen sowie eine Einstellmöglichkeit von Auslösegrenzen auf einen grösseren Abstand zum Ursprung in allen vier Quadranten des Koordinatensystems gleichmässig vorzusehen, um alle Fehlerarten gleichartig behandeln zu können. Der Uebersichtlichkeit halber ist in Fig.

1 nur eine Grenzone im zweiten Quadranten und eine umgeschaltete Auslösegrenze A'I im ersten Quadranten gezeigt.

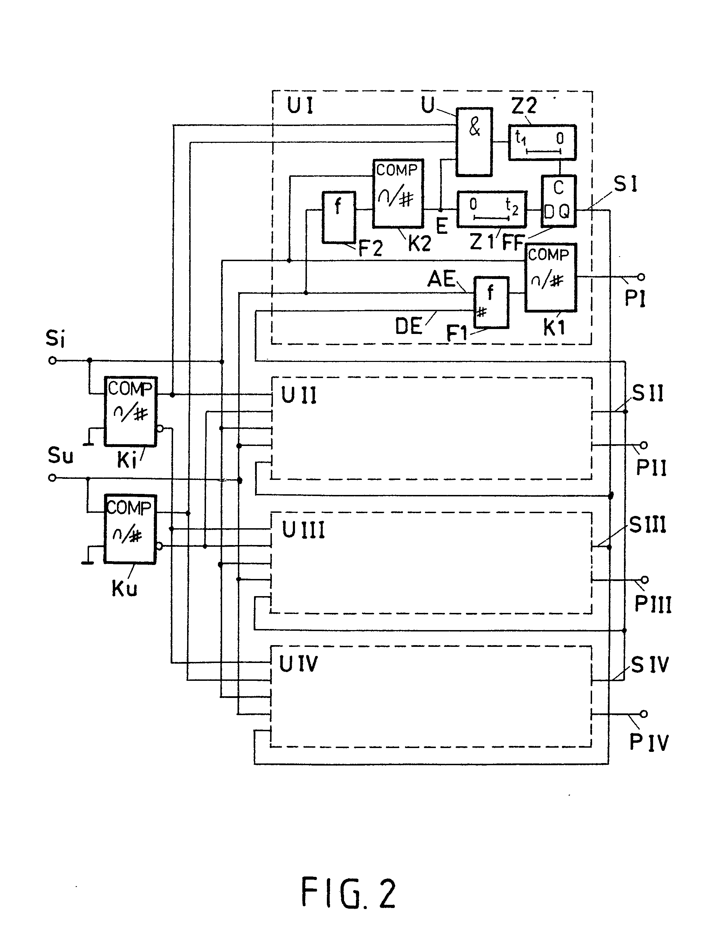

In Fig. 2 ist als Mittel zur Ausführung des erfindungsgemässen Verfahrens eine Schaltungsanordnung dargestellt. Sie ist aus vier identischen Ueberwachungsschaltkreisen UI, UII, UIII, UIV aufgebaut. Jeder von diesen überwacht in jeweils einem Quadranten QI, QII, QIII, QIV des Koordinatensystems den Punkt bzw. seine Bewegungslinie B auf Ueberschreitung der jeweiligen Auslösegrenze AI, AII, AIII, AIV und erzeugt in diesem Fall ein Auslösesignal PI, PII, PIII oder PIV. Weiter überwacht jeder der Ueberwachungsschaltkreise UI, UII, UIII, UIV den Punkt bzw. seine Bewegungslinie B auf Eintritt in die der jeweiligen Auslösegrenze AII usw. vorgelagerte Grenzzone GII usw. bzw. auf das Wiederverlassen dieser Grenzzonen und erzeugt in diesem Fall ein Stellsignal SI, SII, SIII oder SIV, welches zur Einstellung der Auslösegrenze AI bzw. den Auslösegrenzen AI, AIII in den bzw. den jeweils angrenzenden Quadranten QI, QIII verwendet wird.

Die Ueberwachungsschaltkreise UI, UII, UIII, UIV sind mit dem Spannungs- Su sowie dem Stromsprungsignal Si beaufschlagt. In den Ueberwachungsschaltkreisen UI, UII, UIII, UIV sind die Sprungsignale und zwar das Spannungssprungsignal Su jeweils über einen ersten Funktionsgeber F1 auf die Eingänge jeweils eines ersten Komparators K1 geschaltet. Der erste Funktionsgeber F1 erzeugt aus dem Spannungsprungsignal Su jeweils ein Ausgangssignal, welches von diesem nach einer vorgebbaren, der mathematischen Funktion der jeweiligen Auslösegrenze AI, AII, AIII, AIV entsprechenden Funktion abhängt. Der erste Komparator K1 erzeugt an seinem binären Ausgang jeweils dann eine logische « 1 », das Fehlersignal, wenn das Stromsprungsignal Si absolut grösser wird als das Ausgangssignal des ersten Funktionsgebers F1, der Punkt die vorgegebene Auslössegrenze AI, AII, AIII, AIV also überschreitet. In genau der gleichen ten Funktionsgeber F2 der Eintritt des Punktes in die der Auslösegrenze AII jeweils vorgelagerte Grennzone GII überwacht und in diesem Fall ein binäres Eintrittssignal E mit einer logischen « 1 » erzeugt. Die im zweiten Funktionsgeber F2 vorgegebene Funktion entspricht jeweils der mathematischen Form der neben der Auslösegrenze AII die Grenzzone GII begrenzenden Grenze. Das Eintrittssignal E ist über ein erstes Zeitverzögerungsglied Z1 mit einer vorgebbaren Abfallverzögerung t2 auf den D-Eingang eines D-Kippgliedes FF geschaltet sowie auf einen ersten Eingang eines Und-Gliedes U. Ein zweiter und ein dritter Eingang dieses Und-Gliedes U sind jeweils mit den Ausgängen bzw. den invertierten Ausgängen eines den vier Ueberwachungsschaltkreisen UI, UII, UIII, UIV gemeinsam vorgeschalteten dritten Ki und vierten Komparators Ku verbunden. Der dritte Komparator Ki erzeugt an seinem Ausgang dann eine logische « 1 », wenn das Stromsprungsignal Si positiv ist und eine logische « 0 », wenn dieses negativ ist. Am invertierten Ausgang des dritten Komparators Ki erscheinen die logischen Zustände im gerade umgekehrten Sinn. Für den vierten Komparator Ku, der mit dem Spannungssprungsignal Su beaufschlagt ist, gilt entsprechendes. Die Ueberwachungsschaltkreise UI, UII, UIII, UIV sind an die Ausgänge bzw. invertierten Ausgänge des dritten Ki und vierten Komparators Ku derart angeschlossen, dass auf beiden Leitungen immer dann und nur dann eine logische « 1 » ansteht, wenn der Punkt sich gerade in dem dem jeweiligen Ueberwachungsschaltkreis UI, UII, UIII, UIV zugeordneten Quadranten QI, QII, QIII, QIV des Koordinatensystems befindet. Befindet sich der Punkt beispielsweise im Quadranten QI, so steht am zweiten und dritten Eingang des Und-Gliedes U im Ueberwachungsschaltkreis UI jeweils eine logische « 1 » an. In den übrigen Ueberwachungsschaltkreisen UII, UIII, UIV liegt an wenigstens einem der beiden zweiten und dritten Eingänge des jeweiligen Und-Gliedes U dagegen eine logische « 0 ». Der dritte und der vierte Komparator Ki, Ku bilden zusammen also eine Vorzeichenlogik.

Der Ausgang des Und-Gliedes U beaufschlagt in allen Ueberwachungsschaltkreisen UI, UII, UIII, UIV entweder direkt oder über ein zweites Zeitverzögerungsglied Z2 den Takt-Eingang des D-Kippgliedes FF, welches an seinem Ausgang Q jeweils das Stellsignal SI, SII, SIII, SIV erzeugt. Dementsprechend ist der Ausgang des D-Kippgliedes FF im Ueberwachungsschaltkreis UI mit jeweils einem digitalen Stelleingang DE des ersten Funktionsgebers F1 im Ueberwachungsschaltkreis UIV und UIII verbunden. Der Ausgang des D-Kippgliedes FF im Ueberwachungsschaltkreis UII ist jeweils mit einem digitalen Stelleingang DE des ersten Funktionsgebers F1 im Ueberwachungsschaltkreis UIII und UI verbunden ; der Ausgang des D-Kippgliedes FF im Ueberwachungsschaltkreis UIII ist jeweils mit einem digitalen Stelleingang DE des ersten Funktionsgebers F1 im Ueberwachungsschaltkreis UIV und UII und der Ausgang des D-Kippgliedes FF im Ueberwachungsschaltkreis UIV ist jeweils mit einem digitalen Stelleingang DE des ersten Funktionsgebers F1 im Ueberwachungsschaltkreis UIII und UI verbunden.

Das Stellsignal SI, SII, SIII, SIV bewirkt am digitalen Stelleingang DE des ersten Funktionsgebers F1 jeweils, dass die im ersten Funktionsgeber F1 vorgegebenen Funktion auf eine andere Funktion eingestellt wird, die der matematischen Form der Auslösegrenze A'I, A'II, A'III, A'IV mit einem wenigstens abschnittsweise grösseren Abstand vom Ursprung 0 entspricht.

Der Zeitpunkt, zu dem die Einstellung am ersten Funktionsgeber F1 jeweils erfolgt, wird bestimmt durch die Eigenschaften des Takteingangs C am D-Kippglied FF. Ist dies ein dynamischer Eingang, bei dem nur eine Aenderung des logischen Zustandes am Ausgang des Und-Gliedes U von « 0 » auf « 1 » wirksam ist, so erscheint das Stellsignal SI, SII, SIII, SIV, vorausgesetzt das zweite Zeitverzögerungsglied Z2 ist nicht vorhanden, gleichzeitig mit demjenigen Signal, welches am Eingang des Und-Gliedes U als letztes von « 0 » auf « 1 » geht. Nach dem Vorstehenden bedeutet dies, dass das Stellsignal SI, SII, SIII, SIV erscheint, wenn der Punkt in die der Auslösegrenze AII in dem jeweiligen Quadranten QII vorgelagerte

4

Grenzzone GII eintritt.

Ist das zweite Zeitverzögerunglied Z2 vorhanden, und ist eine Anstiegsverzögerung t1 vorgegeben, so erscheint das Stellsignal SI, SII, SIII, SIV die vorgegebene Verzögerungszeit nach Eintritt des Punktes in die der Auslösegrenze AII in dem jeweiligen Quadranten QII vorgelagerte Grenzzone GII.

Ist der Takteingang C am D-Kippglied FF dagegen ein dynamischer Eingang mit Negation, bei dem nur eine Aenderung der logischen Zustandes am Ausgang des Und-Gliedes U von « 1 » auf « 0 » wirksam ist, so erscheint das Stellsignal SI, SII, SIII, SIV gleichzeitig mit demjenigen Signal, welches am Eingang des Und-Gliedes U als erstes von « 1 » auf « 0 » geht, nachdem vorher alle diese Signale auf « 1 » gewesen sein müssen. Nach dem Vorstehenden bedeutet dies, dass das Stellsignal SI, SII, SIII, SIV erscheint, wenn der Punkt die der Auslösegrenze AII in dem jeweiligen Quadranten QII vorgelagerte Grenzzone GII wieder verlässt.

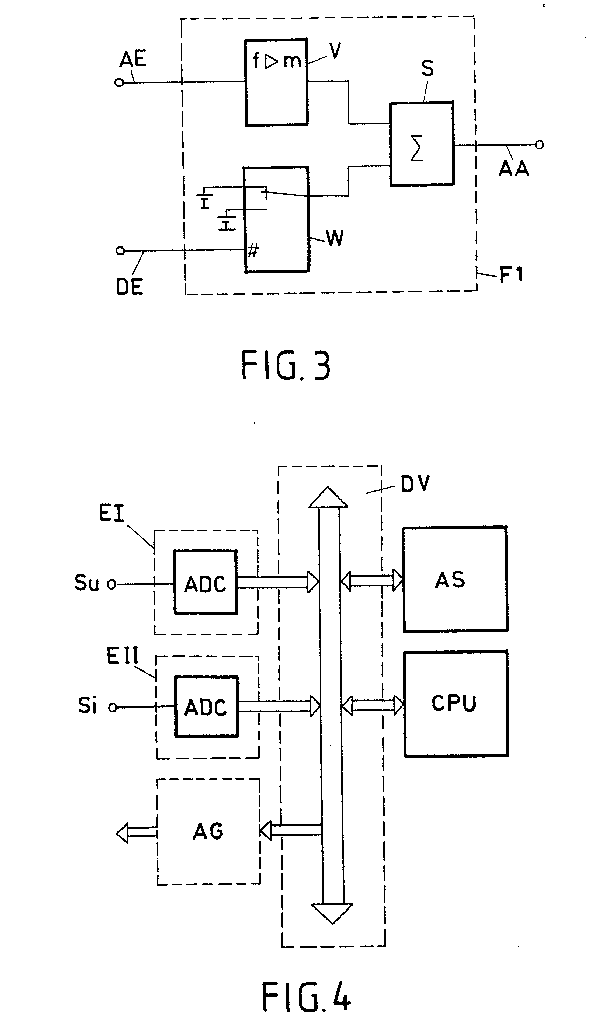

Fig. 3 zeigt ein Beispiel für den Aufbau der in der Schaltungsanordnung gemäss Fig. 2 enthaltenen ersten Funktionsgeber F1. Am analogen Eingang AE des Funktionsgebers F1 liegt jeweils das Spannungssprungsignal Su an. Dieses wird durch einen Verstärker V um einen positiven oder negativen Faktor m verstärkt, anschliessend zu einem, z. B. an einer Spannungsquelle abgegriffenen, konstanten Signalpegel in einem Summierer S addiert und dann auf den analogen Ausgang AA des Funktionsgebers gegeben. Der konstante Signalpegel ist durch einen Wechsler W auf mindestens zwei verschiedene Werte einstellbar. Der Wechsler W wird betätigt über einen digitalen, dem Stelleingang des Funktionsgebers F entsprechenden Eingang DE. So aufgebaute Funktionsgeber F1 liefern lineare Auslösegrenzen, wie sie beispielsweise in Fig. 1 gezeigt sind.

Fig. 4 zeigt ein Blockschaltbild eines Prozessrechensystems, welches eine erste, mit den Spannungssprungsignalen Su, und eine zweite, mit den Stromsprungsignalen Si, beaufschlagte Eingabeeinheit EI, EII aufweist. Jede dieser Eingabeeinheiten EI, EII besteht beispielsweise aus einem Analog-Digital-Wandler ADC, der die analogen Momentanwerte des Spannungssprungsignals Su und des Stromsprungsignals Si abtastet, digitalisiert und zwischenspeichert. Von den Eingabeeinheiten EI, EII werden die Eingabedaten, die digitalisierten Momentanwerte der Sprungsignale über eine Datenverbindung DV in einen Arbeitsspeicher AS überführt. Auf diesen Arbeitsspeicher AS hat das Rechenwerk CPU des Prozessrechensystems, z. B. wieder über die Datenverbindung DV, Zugriff. Durch das Rechenwerk CPU wird auch über Steuereinheiten und Steuerleitungen, die Teil der Datenverbindung DV sind, der gesamte Datenfluss im Prozessrechensystem kontrolliert und gesteuert. Weiter ist an die Datenverbindung DV noch mindestens eine Ausgabeeinheit AG angeschlossen.

Prozessrechensysteme der beschriebenen Art gehören mit allen ihren Komponenten, sowie mit allen zu ihrem Betrieb notwendigen Programmen zum Stand der Technik (vgl. z. B. CAMAC, « A Modular Instrumentation System for Data Handling », Euratom-Bericht Nr. EUR 4100[e]) und sind auf dem Markt erhältlich. Als Bedingung ist an das Prozessrechensystem nur zu stellen, dass es in der Lage ist, eine Datenrate von einigen Kiloherz zu verarbeiten, die es erlaubt, dem Abtasttheorem für die Sprungsignale zu genügen. Um mit einem Prozessrechensystem das erfindungsgemässe Verfahren auszuführen, muss jedoch ein Rechenprogramm neu erstellt werden. Dieses Rechenprogramm muss die im Arbeitsspeicher AS, z. B. in einer Datei abgelegten digitalen Momentanwerte der Sprungsignale lesen, mit diesen Werten die einzelnen Schritte des erfindungsgemässen Verfahrens durchführen, den Auslösesignalen PI, PII, PIII, PIV der bereits beschriebenen Schaltungsanordnung entsprechende Ausgangsgrössen bilden und diese in den Arbeitsspeicher AS, wiederum in eine Datei zurückschreiben. Vom Arbeitsspeicher AS können die Ausgangsgrössen sodann über die Datenverbindung DV und die Ausgabeeinheit AG externen Einheiten, wie z. B. einem Auslöseschaltkreis, zugeführt werden.

Ein Beispiel eines solchen Rechenprogramms ist im folgenden in der Programmiersprache PASCAL angegeber. Eine Beschreibung von PASCAL findet sich u. a. in Rudolf Herschel & Friedrich Pieper « Pascal-Systematische Darstellung von Pascal und Concurrent Pascal für Anwender » R. Oldenburg Verlag München Wien (1981).

```
« program fault-detection (data, data) ;
type
signal = integer ;
section = record
quadrant : integer ;
level : integer
end ;
mode = (normal, a-switched, b-switched) ;
direction = (nome, forward, reverse) ;
data = record
voltage : integer ;
current : integer
end ;
filein = file of data ;
fileout = file of direction ;
var
```

```
delta-u, delta-i : signal ;
operation : mode ;
old section, new-section : section ;
fault : direction ;
datain : filein ;
dataout : fileout ;
procedure determine-section (delta-u, delta-i : signal ; var new-section : section) ;
const
r = < integer value > ;
c = array [10..3] of (0,< integer-value >, < integer-value >, < integer-value > );
var
k, a, b, : integer ;
begin (*determine-section*)
with new-section do begin
if delta-i > = 0 then
if delta-u > = 0 then quadrant : = 1 else quadrant : = 2
else if delta-u > = 0 then quadrant : = 4 else quadrant : = 3 ;
a : = abs (r*delta-i + delta-u) ;
b : = abs (r*delta-i − delta-u) ;
for k : 0 to 2 do
if (a > = c [k]) and (a < c [k + l]) and ((quadrant = 1) or (quadrant = 3)) or (b > = c [k]) and (b < c [k + l])
and ((quadrant = 2) or (quadrant = 4))
then level : = k ;
if (a = c [3]) or (b > = c [3]) then level : = 3
end
end (*determine-section*) ;
procedure check-boundaries (old-section, new-section : section ; var operation : mode ; var fault :
direction) ;
var
q-old, q-new : integer ;
begin (*check boundaries*)
q-old : = old-section · quadrant ;
q-new : = new-section · quadrant ;
if (old-section · level = 1) and (new-section · level = 1) then begin
if ((q-old = 2) or (q-old = 4)) and ((q-new = 1) or (q-new = 3))
then operation : = a-switched ;
if ((q-old = 1) or (q-old = 3)) and ((q-new = 2) or (q-new = 4))
then operation : = b-switched
end ;
if (old section · level = 1) and (new-section · level = 0) then begin
if q-old = q-new then begin
if (q-old = 1) or (q-old = 3) then operation : = b-switched
end
end ;
if (old-section · level = 1) and (new-section · level = 2) then begin
if (q-old = q-new) and (operation = normal) then begin
if (q-old = 1) or (q-old = 3) then fault : = reverse
else fault : = forward
end ;
if (old-section · level = 2) and (new-section · level = 3) then begin
if (q-old = q new) and (operation normal) then begin
if ((q-old = 1) or (q-old = 3)) and (operation = a-switched) then fault : = reverse ;
if ((q-old = 2) or (q-old = 4)) and (operation = b-switched) then fault : = forward
end
end ;
if (old-section · level = 2) and (new-section · level = 2) then begin
if ((q-old = 1) or (q-old = 3)) and ((q-new = 2) or q-new = 4))
and (operation = a-switched) then fault : = forward ;
if ((q-old = 2) or (q-old = 4)) and ((q-new = 1) or (q-new = 3))
and (operation = b-switched) then fault : = reverse
end
end (*check-bondaries*) ;
begin (*fault-detection*)
with old-section do
begin quadrant : 1 ; level : 0 end ;
```

```
operation : = normal ;
fault : = none ;
reset (datain) ;
while fault = none do begin
get (datain) ;
delta-u : datain ↑ · voltage ;
delta-i : datain ↑ · current ;
determine-section (delta-u, delta-i, new section) ;
check-boundaries (old-section, new-section, operation, fault) ;
old-section : = new-section
end ;
reset (dataout) ;
write (dataout, fault) ;
end (*fault detection*). »
```

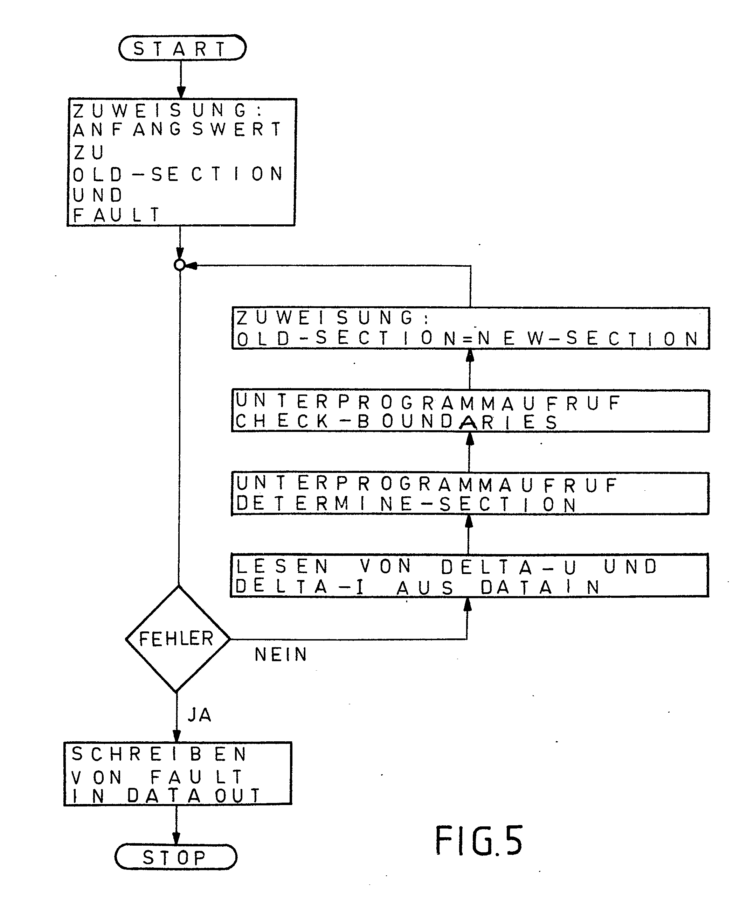

Das vorstehende Programm soll anhand des Flussdiagramms von Fig. 5 noch erläutert werden :

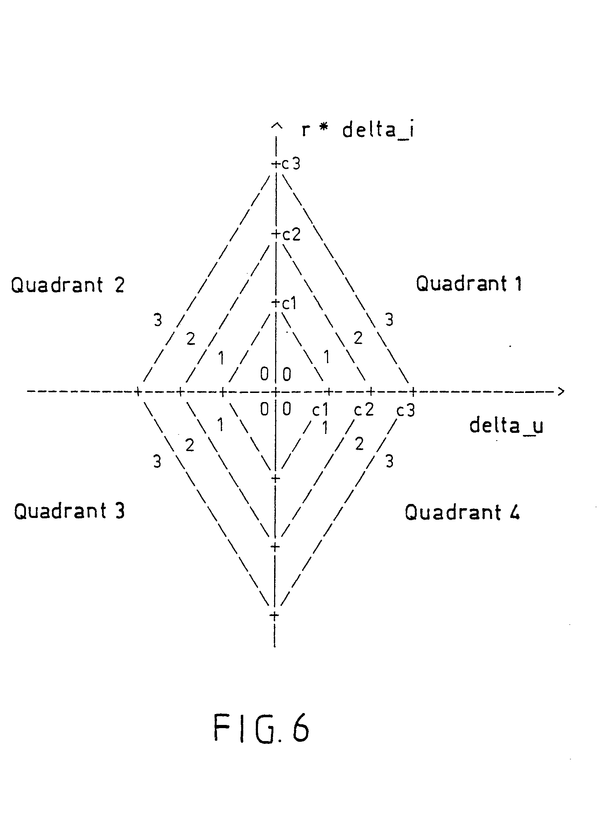

Der Anweisungsteil des Programms beginnt mit einer Zuweisung von Anfangswerten zu den Variablen « old-section », « operation » und « fault ». Die Variable « old-section » beschreibt, in welchem Quadranten und in welcher Zone von Fig. 1a, b bzw. Fig. 6 sich der durch die aktuellen Werte der Sprungsignale definierte Punkt gerade befindet. Die Variable « operation » beschreibt, ob eine Auslösegrenze zu verschieben bzw. verschoben ist und in welcher Weise, und die Variable « fault » beschreibt, ob ein Fehler vorhanden ist sowie die Richtung des Fehlers. Die Anfangswertzuweisung erfolgt derart, dass für den weiteren Programmablauf von einem normalen fehlerfreien Zustand ausgegangen wird, wobei sich der Punkt im Quadranten 1 in der Zone 0 befindet.

Die nachfolgende Abfrage, ob ein Fehler vorliegt oder nicht, führt deshalb zwingend in den im rechten Zweig des Flussdiagramms von Fig. 5 gelegenen Anweisungsblock. Dieser führt in Form einer Schleife jeweils zur Fehlerabfrage zurück. Im Anweisungsblock werden als erstes die aktuellen Werte der Sprungsignale die im Programm durch die Variablen « delta-u », « delta-i » repräsentiert werden, von einer im Arbeitsspeicher AS gespeicherten Datei « datain » gelesen. Es ist dabei davon auszugehen, dass die aktuellen Werte der Sprungsignale wie beschrieben vom Prozessrechensystem zuvor dort abgelegt worden sind.

Mit den aktuellen Werten der Sprungsignale wird sodann ein Unterprogramm namens « determine-section » aufgerufen, welches berechnet, in welchem Quadranten und in welcher Zone im Koordinatensystem sich der durch die aktuellen Werte der Sprungsignale definierte Punkt befindet. Das Ergebnis wird einer Variablen « new-section » zugewiesen. Durch Vergleich von « old-section » mit « new-section » stellt ein weiteres Unterprogramm namens « check-bounderies » daraufhin fest, ob der Punkt den Quadranten oder die Zone gewechselt hat. Daraus berechnet das Unterprogramm weiter, ob ein Fehler vorliegt, oder ob eine Auslösegrenze zu verschieben ist. Danach kehrt das Programm zur Fehlerabfrage zurück und kann von hier aus die beschriebene Schleife über den Anweisungesblock im Prinzip beliebig oft durchlaufen. Vor dem erneuten Einlesen der Werte der Sprungsignale ist es jedoch erforderlich, dass diese in der Zwischenzeit durch neue aktuellere Werte ersetzt worden sind. Diese Aktualisierung der Werte der Sprungsignale kann z. B. während einer kurzen Unterbrechung des Programmablaufes vor dem Einlesen erfolgen und wird gesteuert durch das bekannte übergeordnete Betriebssystem des Prozessrechensystems.

Ergibt sich bei der Fehlerabfrage nach dem Durchlaufen der Schleife, dass ein Fehler vorliegt, so tritt das Programm aus der Schleife aus und verfolgt einen alternativen Weg, auf welchem der Wert der Variablen « fault », die den Fehler sowie die Fehlerrichtung beschreibt, auf die Datei « dataout » geschrieben wird. Damit ist das Programm beendet.

**Patentansprüche**

1. Verfahren zur Fehler- oder auch Fehlerrichtungsdetektion in elektrischen Leitungen, bei welchem ein Auslösesignal erzeugt wird, falls in einem kartesischen Koordinatensystem, dessen eine Koordinate Spannungssprungsignalen (Su) und dessen andere Koordinate Stromsprungsignalen (Si) entspricht, ein durch diese Sprungsignale definierter Punkt eine Bewegungslinie (B) beschreibt, welche Auslösegrenzen (AI, AII, AIII, AIV) überschreitet, dadurch gekennzeichnet, dass den Auslösegrenzen (AI, AII, AIII, AIV) Grenzzonen (GII) vorgelagert werden und zur Vermeidung von fehlerhaften Signalen zumindest die Auslösegrenze (AI) des in Richtung der Bewegungslinie (B) durchlaufenen zweiten Quadranten (QI) des Koordinatensystems verschoben wird.

2. Verfahren nach Anspruch 1, dadurch gekennzeichnet, dass für die Tiefe der einer Auslösegrenze (AII) vorgelagerten Grenzzone (GII), gemessen von jedem beliebigen Punkt der Auslösegrenze (AII) zum Ursprung (0) des Koordinatensystems, wenigstens abschnittsweise Werte zwischen 5 % und 50 % des Abstandes des jeweiligen Punkts vom Ursprung (0) gewählt werden.

3. Verfahren nach Anspruch 1, dadurch gekennzeichnet, dass für die Tiefe der einer Auslösegrenze

(All) vorgelagerten Grenzzone (GII), gemessen jeweils senkrecht zur Auslösegrenze (All), ein konstanter Wert gewählt wird.

4. Verfahren nach Anspruch 1, dadurch gekennzeichnet, dass die Auslösegrenze (Al) des in Richtung der Bewegungslinie (B) durchlaufenen zweiten Quadranten (QI) derart verschoben wird, dass die Bewegungslinie (B) unterhalb der verschobenen Auslösegrenze (A'l) verläuft.

5. Verfahren nach Anspruch 4, dadurch gekennzeichnet, dass die Punkte der Auslösegrenze (Al), gemessen zum Ursprung (0) des Koordinatensystems, um 5 % bis 100 % vom Ursprung (0) weg verschoben werden.

6. Verfahren nach einem der Ansprüche 1 bis 5, dadurch gekennzeichnet, dass der Zeitpunkt der Verschiebung der Auslösegrenze (Al) durch den Eintritt des Punktes in die einer Auslösegrenze (All) vorgelagerte Grenzzone (GII) bestimmt wird.

7. Verfahren nach einem der Ansprüche 1 bis 5, dadurch gekennzeichnet, dass der Zeitpunkt der Verschiebung der Auslösegrenze (Al) durch den Ablauf einer vorgebbaren Zeitspanne nach Eintritt des Punktes in die einer Auslösegrenze (All) vorgelagerte Grenzzone (GII) bestimmt wird.

8. Verfahren nach einem der Ansprüche 1 bis 5, dadurch gekennzeichnet, dass der Zeitpunkt der Verschiebung der Auslösegrenze (Al) durch das Verlassen der einer Auslösegrenze (All) vorgelagerten Grenzzone (GII) durch den Punkt bestimmt wird.

9. Verfahren nach einem der Ansprüche 1 bis 8, dadurch gekennzeichnet, dass die Auslösegrenzen (All, AIV, bzw. Al, Alll) in jeweils gegenüberliegenden Quadranten (QII, QIV bzw. QI, QIII) des Koordinatensystems wenigstens abschnittsweise auf einen grösseren Abstand zum Ursprung (0) des Koordinatensystems eingestellt werden.

10. Mittel zur Ausführung des Verfahrens nach einem der Ansprüche 1 bis 9 mit einem Ueberwachungsschaltkreis (UI), welcher einen mit den Strom- und Spannungssprungsignalen (Si, Su) über mindestens einen ersten Funktionsgeber (F1) beaufschlagten ersten Komparator (K1) aufweist, an dessen Ausgang ein Auslösesignal (PI) abgreifbar ist, dadurch gekennzeichnet, dass der Ueberwachungsschaltkreis (UI) einen mit den Strom- und Spannungssprungsignalen (Si, Su) über mindestens einen zweiten Funktionsgeber (F2) beaufschlagten zweiten Komparator (K2) aufweist, an dessen Ausgang ein Stellsignal (SI) für den ersten Funktionsgeber mindestens eines weiteren identisch aufgebauten Ueberwachungsschaltkreises (UII, UIV) abgreifbar ist.

11. Mittel sur Ausführung des Verfahrens nach Anspruch 10, gekennzeichnet durch eine mit den Spannungs- und Stromssprungsignalen (Su, Si) beaufschlagte und mit den Ueberwachungsschaltkreisen (UI, UII, UIII, UIV) verbundene Vorzeichenlogik (Ki, Ku), durch welche in diesen in Abhängigkeit von den Vorzeichen der Spannungs- und Stromssprungsignale (Su, Si) die Stellsignale (SI, SII, SIII, SIV) freischaltbar oder sperrbar sind.

12. Mittel zur Ausführung des Verfahrens nach einem der Ansprüche 1 bis 9, dadurch gekennzeichnet, dass dieses Mittel ein Prozessrechensystem ist, mit einer Prozessperipherie, bestehend aus einer ersten (EI) mit den Spannungssprungsignalen (Su) und einer zweiten (EII) mit den Stromsprungsignalen (Si) beaufschlagten Eingabeeinheit und einer Ausgabeeinheit (AG), mit einem Speicher (AS) und einem Rechenwerk (CPU) sowie mindestens einer die genannten Komponenten (EI, EII, AG, AS, CPU) verbindenden Datenverbindung (DV).

**Claims**

1. Method for detecting errors or also the direction of errors in electrical lines, in which method a triggering signal is generated if in a cartesian system of coordinates, one coordinate of which corresponds to voltage step signals (Su) and the other coordinate of which corresponds to current step signals (Si), a point defined by these step signals describes a line of motion (B) which exceeds triggering limits (Al, All, Alll, AIV), characterised in that the triggering limits (Al, All, Alll, AIV) are preceded by boundary zones (GII) and at least the triggering limit (Al) of the second quadrant (QI), passed in the direction of the line of motion (B), of the coordinate system is displaced in order to avoid faulty signals.

2. Method according to Claim 1, characterised in that values of between 5 % and 50 % of the distance of the respective point from the origin (0) are selected at least section by section for the depth of the boundary zone (GII) preceding a triggering limit (All), measured from any arbitrary point of the triggering limit (All) to the origin (0) of the coordinate system.

3. Method according to Claim 1, characterised in that a constant value is selected for the depth of the boundary zone (GII) preceding a triggering limit (All), measured in each case perpendicularly to the triggering limit (All).

4. Method according to Claim 1, characterised in that the triggering limit (Al) of the second quadrant (QI), passed in the direction of the line of motion (B), is displaced in such a manner that the line of motion (B) extends below the displaced triggering limit (A'l).

5. Method according to Claim 4, characterised in that the points of the triggering limit (Al) are moved away from the origin (0) by 5 % to 100 %, measured from the origin (0) of the coordinate system.

6. Method according to one of Claims 1 to 5, characterised in that the time of displacement of the

triggering limit (AI) is determined by the entry of the point into the boundary zone (GII) preceding a triggering limit (AII).

7. Method according to one of Claims 1 to 5, characterised in that the time of displacement of the triggering limit (AI) is determined by the completion of a predeterminable time interval after entry of the point into the boundary zone (GII) preceding a triggering limit (AII).

8. Method according to one of Claims 1 to 5, characterised in that the time of displacement of the triggering limit (AI) is determined by the point leaving the boundary zone (GII) preceding a triggering limit (AII).

9. Method according to one of Claims 1 to 8, characterised in that the triggering limits (AII, AIV and AI, AIII) in respectively opposite quadrants (QII, QIV and QI, QIII) of the coordinate system are adjusted at least section by section to a greater distance from the origin (0) of the coordinate system.

10. Means for carrying out the method according to one of Claims 1 to 9, comprising a monitoring circuit (UI) which is provided with a first comparator (K1) to which the current and voltage step signals (Si, Su) are applied via at least one first function generator (F1) and at the output of which a triggering signal (PI) can be picked up, characterised in that the monitoring circuit (UI) is provided with a second comparator (K2) to which the current and voltage step signals (Si, Su) are applied via at least one second function generator (F2) and at the output of which an adjusting signal (SI) for the first function generator of at least one further monitoring circuit (UII, UIV) of identical construction can be picked up.

11. Means for carrying out the method according to Claim 10, characterised by a sign logic (Ki, Ku) to which the voltage and current step signals (Su, Si) are applied and which is connected to the monitoring circuits (UI, UII, UIII, UIV) and by means of which the adjusting signals (SI, SII, SIII, SIV) can be enabled or inhibited in the monitoring circuits as a function of the signs of the voltage and current step signals (Su, Si).

12. Means for carrying out the method according to one of Claims 1 to 9, characterised in that this means is a process computer system comprising a process peripheral consisting of a first input unit (EI) to which the voltage step signals (Su) are applied and a second input unit (EII) to which the current step signals (Si) are applied and an output unit (AG), comprising a memory (AS) and a central processing unit (CPU) and at least a data link (DV) which joins the said components (EI, EII, AG, AS, CPU).

**Revendications**

1. Procédé pour détecter des défauts ou la direction de défauts dans des lignes électriques, suivant lequel un signal de déclenchement est produit, au cas où dans un système de coordonnées cartésiennes, dont une coordonnée correspond à des signaux de saut de tension (Su) et dont l'autre coordonnée correspond à des signaux de saut d'intensité (Si), un point défini par ces signaux de saut décrit une ligne de déplacement (B), qui dépasse des limites de déclenchement (AI, AII, AIII, AIV), caractérisé en ce que des zones de limite (GII) précèdent les limites de déclenchement (AI, AII, AIII, AIV) et pour éviter des signaux erronés, au moins la limite de déclenchement (AI) du deuxième quadrant (QI) du système de coordonnées parcouru dans le sens de la ligne de déplacement (B) est décalé.

2. Procédé suivant la revendication 1, caractérisé en ce que pour la profondeur de la zone de limite (GII) précédant une limite de déclenchement (AII), mesurée à partir de n'importe quel point de la limite de déclenchement (AII) jusqu'à l'origine (0) du système de coordonnées, on choisit au moins par sections des valeurs comprises entre 5 % et 50 % de la distance séparant ce point en question de l'origine (0).

3. Procédé suivant la revendication 1, caractérisé en ce que pour la profondeur de la zone de limite (GII) précédant une limite de déclenchement (AII), on choisit une valeur constante mesurée chaque fois perpendiculairement à la limite de déclenchement (AII).

4. Procédé suivant la revendication 1, caractérisé en ce que la limite de déclenchement (AI) du deuxième quadrant (QI) parcouru dans le sens de la ligne de déplacement (B) est décalée d'une manière telle que la ligne de déplacement (B) s'étende en dessous de la limite de déclenchement décalée (A'I).

5. Procédé suivant la revendication 4, caractérisé en ce que les points de la limite de déclenchement (AI), mesurés jusqu'à l'origine (0) du système de coordonnées, sont décalés de 5 à 100 % de l'origine (0).

6. Procédé suivant l'une quelconque des revendications 1 à 5, caractérisé en ce que le moment du décalage de la limite de déclenchement (AI) est déterminé par l'entrée du point dans la zone de limite (GII) précédant la limite de déclenchement (AII).

7. Procédé suivant l'une quelconque des revendications 1 à 5, caractérisé en ce que le moment du décalage de la limite de déclenchement (AI) est déterminé par le déroulement d'un intervalle de temps prédéfini après l'entrée du point dans la zone de limite (GII) précédant une limite de déclenchement (AII).

8. Procédé suivant l'une quelconque des revendications 1 à 5, caractérisé en ce que le moment du décalage de la limite de déclenchement (AI) est déterminé par le fait que le point quitte la zone de limite (GII) précédant une limite de déclenchement (AII).

9. Procédé suivant l'une quelconque des revendications 1 à 8, caractérisé en ce que les limites de déclenchement (AII, AIV ou AI, AIII) sont établies au moins par sections à une distance croissante de l'origine (0) du système de coordonnées dans des quadrants chaque fois opposés (QII, QIV et QI, QIII) du système de coordonnées.

10. Moyen pour exécuter le procédé suivant l'une quelconque des revendications 1 à 9 avec un circuit de surveillance (UI) qui comporte un premier comparateur (K1) alimenté au moyen de signaux de saut d'intensité et de tension (Si, Su) par l'intermédiaire d'au moins un premier générateur de fonction (F1), un signal de déclenchement (PI) pouvant être obtenu à la sortie du comparateur (K1), caractérisé en ce que le circuit de surveillance (UI) comporte un deuxième comparateur (K2) alimenté au moyen des signaux de saut d'intensité et de tension (Si, Su) par l'intermédiaire d'au moins un deuxième générateur de fonction (F2), un signal de réglage (Si) pour le premier générateur de fonction d'au moins un autre circuit de surveillance identique (UII, UIV) pouvant être obtenu à la sortie de ce second comparateur.

11. Moyen pour exécuter le procédé suivant la revendication 10, caractérisé par un dispositif logique de signe (Ki, Ku) alimenté par les signaux de saut de tension et d'intensité (Su, Si) et connecté aux circuits de surveillance (UI, UII, UIII, UIV), par lequel les signaux de réglage (SI, SII, SIII, SIV) peuvent être libérés ou bloqués dans ces circuits en fonction du signe des signaux de saut de tension et d'intensité (Su, Si).

12. Moyen pour exécuter le procédé suivant l'une quelconque des revendications 1 à 9, caractérisé en ce qu'il s'agit d'un système calculateur de processus comportant des moyens périphériques formés d'une première unité d'entrée (EI) alimentée au moyen des signaux de saut de tension (Su) et d'une seconde unité d'entrée (EII) alimentée au moyen des signaux de saut d'intensité (Si) ainsi que d'une unité de sortie (AG), une mémoire (AS) et un processeur central (CPU), de même qu'une connexion de données (DV) reliant au moins un desdits éléments (EI, EII, AG, AS, CPU).

0 098 624

FIG.1a

FIG.1b

FIG. 2

0 098 624

FIG. 3

FIG. 4

3

START

ZUWEISUNG:
ANFANGSWERT
ZU
OLD-SECTION
UND
FAULT

ZUWEISUNG:
OLD-SECTION=NEW-SECTION

UNTERPROGRAMMAUFRUF
CHECK-BOUNDARIES

UNTERPROGRAMMAUFRUF
DETERMINE-SECTION

LESEN VON DELTA-U UND
DELTA-I AUS DATAIN

FEHLER     NEIN

JA

SCHREIBEN
VON FAULT
IN DATAOUT

STOP

FIG.5

FIG. 6